# EUROPÄISCHE PATENTANMELDUNG

(11) **EP 3 489 584 A1**
(43) Veröffentlichungstag der Anmeldung: **29.05.2019**
(21) Anmeldenummer: 18206050.9
(22) Anmeldetag: 13.11.2018
(51) Int. Cl.: F24C 7/08

(54) **VERFAHREN ZUR STEUERUNG EINES KOCHGERÄTS MIT EINEM EXTERNEN STEUERGERÄT, KOCHGERÄT UND SYSTEM**

(30) Priorität: 22.11.2017 DE 102017220814
(71) Anmelder: E.G.O. Elektro-Gerätebau GmbH, 75038 Oberderdingen (DE)
(72) Erfinder: Egenter, Christian, 75015 Bretten (DE); Frank, Marcus, 75056 Sulzfeld (DE); Schaumann, Uwe, 75038 Oberderdingen (DE); Schmidt, Kay, 75038 Oberderdingen-Flehingen (DE)
(74) Vertreter: Patentanwälte Ruff, Wilhelm, Beier, Dauster & Partner mbB

(57) **Zusammenfassung**

Bei einem Verfahren zur Steuerung eines Kochgeräts mit einer Heizeinrichtung und einer internen Kochgerätsteuerung mittels eines externen Steuergeräts, das mit einem Temperatursensor verbunden ist, wird in einem ersten Schritt eine Plausibilitätsprüfung der Steuerbefehle und/oder des aktuellen Betriebszustands des Kochgeräts durchgeführt hinsichtlich einer Temperatur eines aufgestellten Kochgefässes. Bei Abweichungen der Plausibilitätsprüfung wird eine Leistungsfreigabe reduziert als Sicherheitsmaßnahme. Eine von dem externen Steuergerät gesteuerte Heizeinrichtung wird dann bezüglich Leistungshöhe und/oder bezüglich zeitlicher Heizdauer begrenzt als Ist-Leistung und/oder Ist-Heizdauer bei der Ansteuerung der Heizeinrichtung.

## Beschreibung

### Anwendungsgebiet und Stand der Technik

Die Erfindung betrifft ein Verfahren zur Steuerung eines Kochgeräts, insbesondere eines Kochfelds oder eines Backofens, mit einem externen Steuergerät. Des Weiteren betrifft die Erfindung ein solches Kochgerät sowie ein System bestehend aus einem Kochgerät und einem externen Steuergerät.

Die Vernetzung von elektrischen Geräten, insbesondere auch von Kochgeräten, im privaten Haushalt nimmt immer weiter zu. Dabei sollen vor allem mehr Möglichkeiten geschaffen werden, Kochgeräte mit einem externen Steuergerät zu steuern, beispielsweise mit einer speziellen Fernbedienung einerseits oder einem mobilen Endgerät andererseits. So kann es unter Umständen auch ermöglicht werden, neue Funktionen wie Programmabläufe odgl. mittels des externen Steuergeräts zu implementieren, welche zuvor noch nicht verfügbar waren in dem Kochgerät. Dabei gilt eine erhöhte Sicherheitsanforderung.

Aus der DE 19802558 A1 ist es bekannt, ein Kochfeld als Kochgerät mit einer Fernbedienung als speziellem externen Steuergerät zu bedienen.

Aus der WO 2015/055606 A2 ist es bekannt, bei einem Backofen einen Selbsttest durchzuführen, mit dem ermittelt wird, ob bestimmte Funktionseinheiten des Backofens bestimmungsgemäß funktionieren. So soll ein unsicherer Betriebszustand verhindert werden.

### Aufgabe und Lösung

Der Erfindung liegt die Aufgabe zugrunde, ein eingangs genanntes Verfahren, ein Kochgerät sowie ein entsprechendes System zu schaffen, mit denen Probleme des Standes der Technik gelöst werden können und es insbesondere möglich ist, Funktionalitäten eines Kochgeräts zu erweitern sowie den Bedienkomfort zu verbessern und gleichzeitig sicherzustellen, dass eine Bediensicherheit bzw. eine Betriebssicherheit des Kochgeräts erfüllt ist, wobei ein zusätzlicher Schutz implementiert werden soll, der die Auswirkungen eines möglichen Fehlers des externen Steuergeräts oder in der Kommunikation mit diesem in seiner negativen Auswirkung begrenzen kann.

Gelöst wird diese Aufgabe durch ein Verfahren mit den Merkmalen des Anspruchs 1, ein Kochgerät mit den Merkmalen des Anspruchs 16 sowie ein System mit den Merkmalen des Anspruchs 17. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren, nur für das Kochgerät oder nur für das System beschrieben. Sie sollen jedoch unabhängig davon sowohl für das Verfahren als auch für ein Kochgerät sowie für ein entsprechendes System selbständig und unabhängig voneinander gelten können. Der Wortlaut der Ansprüche wird durch ausdrückliche Bezugnahme zum Inhalt der Beschreibung gemacht.

Für das erfindungsgemäße Verfahren zur Steuerung eines Kochgeräts mit einem externen Steuergerät weist das Kochgerät mindestens eine Heizeinrichtung und eine interne Kochgerätsteuerung auf. Vorteilhaft ist es ein Kochfeld, es kann auch ein Backofen oder ein Küchengerät mit zumindest einer Heizeinrichtung sein. Die interne Kochgerätsteuerung im Kochgerät ist zur Ansteuerung der mindestens einen Heizeinrichtung und zur Abspeicherung eines Zustands des Kochgeräts, der Heizeinrichtung und/oder des Kochgefässes ausgebildet. Dieser Zustand wird anhand der Informationen eines internen Sensors im Kochgerät und/oder der Informationen des Sensors des externen Steuergeräts und/oder der Steuerbefehle des externen Steuergeräts erfasst bzw. bestimmt. Alternativ kann ein Kochgerät ohne Sensor den Zustand bestimmen, indem der bisherige Betrieb des Kochgeräts bzw. der Heizeinrichtung erfasst wird durch Informationen in der Kochgerätsteuerung, beispielsweise aufgrund bisheriger Leistungsprofile. Dieser Zustand wird während des Betriebs des Kochgeräts beobachtet bzw. überwacht, vorzugsweise wird er auch abgespeichert. Das externe Steuergerät ist außerhalb des Kochgeräts angeordnet, vorteilhaft wie eine Fernsteuerung. Es gibt Steuerbefehle an die Kochgerätsteuerung, um das Kochgerät bzw. die mindestens eine Heizeinrichtung zu steuern. So kann zusätzlich zu einer eingebauten Bedieneinrichtung des Kochgeräts eine neuartige und alternative bzw. zusätzliche Bedienmöglichkeit geschaffen werden. Vor allem aber kann es ermöglicht werden, dass neue Funktionalitäten in dem externen Steuergerät implementiert werden, was leichter ist als in einer fest eingebauten Kochgerätsteuerung.

Vorteilhaft kann mindestens ein Sensor zur Erfassung eines Zustands des Kochgeräts, der Heizeinrichtung und/oder eines Kochgefässes darauf vorgesehen sein, der besonders vorteilhaft ein Temperatursensor ist. Die Temperatur ist ein hier sehr gut geeignetes Maß, um einen möglicherweise kritischen Zustand am Kochgerät bzw. beim Kochverfahren zu erkennen.

Das Verfahren weist die folgenden Schritte auf. In einem Schritt, der ein erster vorausgehender Schritt sein kann, wird eine Plausibilitätsprüfung der Steuerbefehle und/oder des aktuellen Betriebszustands des Kochgeräts durchgeführt, es wird also in einfachen Worten überprüft, ob die Steuerbefehle bzw. der aktuelle Betriebszustand einen Sinn ergeben und tatsächlich so sein können. Dies zielt vor allem darauf ab, ob der vorgenannte Sensor auch zutreffend einen Zustand erfasst bzw. auch genau genug erfasst. Bei der Plausibilitätsprüfung wird der bestimmte Zustand mit anderen Informationen zu einem Zustand des Kochgeräts, der Heizeinrichtung und/oder des Kochgefässes verglichen, die dort vorhanden sind, weil sie die Kochgerätsteuerung erfasst hat, alternativ das externe Steuergerät erfasst hat. So kann man eine mögliche Abweichung zwischen Ist-Zustand, beispielsweise ermittelt aus dem bisherigen Betrieb oder gemessen an einem Sensor, und Soll-Zustand, ermittelt aus Informationen zum Zustand des Kochgeräts, der Heizeinrichtung und/oder des Kochgefässes, erhalten. Ist die Abweichung noch nicht zu groß, also bei einer Abweichung unterhalb eines vorgegebenen Grenzwerts dafür, kann der Betrieb des Kochgeräts weitergehen. Liegt die Abweichung oberhalb des vorgegebenen Grenzwerts so wird der Betrieb des Kochgeräts eingeschränkt, was auf unterschiedliche Art erfolgen kann, vorzugsweise zumindest mit reduzierter Leistung der Heizeinrichtung. Dann liegt schließlich ein Problem vor wie beispielsweise ein nicht mehr ausreichend genau messender Sensor oder ein Fehler bei der Auswertung des Sensors oder in der Kommunikationskette.

In einem weiteren Schritt, der dem zuvor beschriebenen Schritt nachfolgen kann, aber auch davor erfolgen kann, wird ein Steuerbefehl des externen Steuergeräts bezüglich einer Soll-Leistung und/oder einer Soll-Heizdauer von der Kochgerätsteuerung erhalten bzw. erfasst. So gibt das externe Steuergerät einen Steuerbefehl zum Steuern des Betriebs des Kochgeräts ab, entweder automatisch von einem darauf ablaufenden Automatik-Programm oder manuell von einer Bedienperson.

Im Fall einer vorgenannten Abweichung oberhalb des Grenzwerts reduziert die Kochgerätsteuerung in einem nachfolgenden Schritt also eine von dem externen Steuergerät gegebene Leistungshöhe oder Heizdauer bei der Umsetzung des Steuerbefehls für die mindestens eine von dem externen Steuergerät gesteuerte Heizeinrichtung als Ist-Leistungshöhe und/oder als Ist-Heizdauer, mit der die Heizeinrichtung dann tatsächlich angesteuert wird. Dann liegt nämlich wohl ein kritischer Zustand vor oder sein Vorliegen kann zumindest nicht ausgeschlossen werden.

Im Fall einer vorgenannten Abweichung unterhalb des Grenzwerts wird jedoch in einem nachfolgenden Schritt eine von der Kochgerätsteuerung akzeptierte Leistungshöhe oder Heizdauer als Umsetzung des Steuerbefehls für die mindestens eine von dem externen Steuergerät gesteuerte Heizeinrichtung bezüglich Leistungshöhe und/oder bezüglich Heizdauer direkt als Ist-Leistungshöhe und/oder als Ist-Heizdauer übernommen, mit der die Heizeinrichtung dann tatsächlich angesteuert wird. Dann liegt wohl offensichtlich kein kritischer Zustand vor oder kann demnächst eintreten, so dass eine vom externen Steuergerät vorgegebene Leistung nicht reduziert werden muss.

Damit kann erhöhten Sicherheitsanforderungen Rechnung getragen werden, da das Kochgerät schließlich mit dem externen Steuergerät bedient werden soll, welches eben fehlerhaft sein kann. Es ist in Ausgestaltung der Erfindung möglich, diese Begrenzung nur dann durchzuführen, wenn das Ergebnis der Plausibilitätsprüfung negativ ausgefallen ist.

So kann mit der Erfindung die Sicherheit erhöht werden, wenn ein Kochgerät mit einem externen Steuergerät bedient werden soll, wobei vorteilhaft bei dieser Bedienung ein Temperatursensor benutzt wird. So können vor allem temperaturgeregelte Abläufe mit dem externen Steuergerät durchgeführt werden.

So ist es möglich, externe Geräte als externe Steuergeräte an das System anzubinden und fehlerhafte Zustände in der Zuordnung des externen Steuergeräts zur Heizeinrichtung auf der ein Kochgefäß betrieben wird, in der Kommunikation zwischen Kochgerät und externem Steuergerät sowie eine mögliche Fehlfunktion des externen Steuergeräts selbst nach Möglichkeit zu erkennen und das System in einem sicheren Zustand zu halten. So können beispielsweise Temperaturen in einem Kochgefäß unterhalb einer möglichen Entflammtemperatur, insbesondere von Öl bzw. Fett, durch interne Beschränkung der extern angeforderten Leistung gehalten werden, auch wenn die Bedienperson dies trotz bestimmungsgemäß geforderter Überwachung unterlässt.

Es kann auch vorgesehen sein, dass die Plausibilitätsprüfung erfolgt nachdem die Kochgerätsteuerung einen Steuerbefehl des externen Steuergeräts erhalten hat. Ansonsten wäre diese Plausibilitätsprüfung ohne einen externen Steuerbefehl gar nicht notwendig, und es würde ja auch nichts vorliegen, was auf Plausibilität gegen den aktuellen Zustand des Kochgeräts geprüft werden könnte. Wird durch die Kochgerätsteuerung ein kritischer Zustand bei der Plausibilitätsprüfung vermutet oder gar erkannt, dann kann eine Leistungsanforderung des externen Steuerbefehls auf einen unkritischen Wert reduziert werden oder sogar ignoriert bzw. weggestrichen werden. Andernfalls kann die Leistungsanforderung des externen Steuerbefehls übernommen werden, um sie als Leistung durch die Heizeinrichtung umzusetzen. Ist von dem externen Steuergerät über einen vordefinierten Zeitraum, vorzugsweise bis zu 15 sec, kein neuer Steuerbefehl gesendet worden, so kann die interne Kochgerätsteuerung eine erneute Prüfung auch eigenständig starten.

Mögliche Beispiele für externe Steuergeräte sind Bediengeräte, die separat vom Kochgerät ausgebildet sind und die eine manuelle Eingabe von Leistungsstufen oder Funktionen alternativ zur integrierten Bedienung ermöglichen. Zumeist zeichnen sich diese durch besondere Darstellungs- oder Eingabemöglichkeiten aus, die deutlich über die im Kochgerät selbst integrierten Möglichkeiten hinausgehen. Zur Unterscheidung hierzu gibt es externe Steuergeräte, die auf Basis von mit ihr verbundener Sensorik die Leistungsanforderungen für eine Heizeinrichtung mittels einer Regelschleife ermitteln können. Die Sensoren können hierbei im Kochgefäß integriert sein, sie können an diesem angebracht werden oder befinden sich in einem Lebensmittel, das sich im zu regelnden Kochgefäß befindet. Ein Sensor nahe am Lebensmittel ist besonders gut für eine Prozessregelung eines Kochvorgangs geeignet. Zum einen kann das externe Steuergerät in einem sogenannten smarten Kochgefäß integriert sein oder als App bzw. Anwendung auf einem weiteren Gerät wie einem Smartphone oder einem Tablet-Computer ablaufen. In allen Fällen erhält die interne Kochgerätsteuerung nach einem erfolgreichen Pairing von externem Steuergerät und der Kochgerätsteuerung sowie der Freigabe des externen Steuergeräts durch beispielsweise eine Bestätigung mittels einer Benutzereingabe am Kochgerät Anforderungen von dem externen Steuergerät zur Umsetzung durch das Kochgerät. Vorzugsweise gibt die Kochgerätsteuerung den Status der Heizeinrichtung, insbesondere die umgesetzte Leistung der Heizeinrichtung, an das externe Steuergerät zurück.

Allgemein kann mindestens ein Sensor zur Bestimmung des Zustand des Kochgeräts, der Heizeinrichtung und/oder des Kochgefässes vorgesehen sein, wobei die interne Kochgerätsteuerung zur Ansteuerung der Heizeinrichtung und zur Abspeicherung eines Zustands des Kochgeräts, der Heizeinrichtung und/oder des Kochgefässes anhand der Informationen des Sensors und/oder der Steuerbefehle, insbesondere des externen Steuergeräts, ausgebildet ist. Dabei kann der mindestens eine Sensor abgefragt werden, und das Ergebnis der Abfrage in der Kochgerätsteuerung verwendet werden.

Kochgeräte besitzen häufig, insbesondere Induktionskochfelder fast immer, einen mit einer Heizeinrichtung verbundenen Temperatursensor. Diese Temperatursensoren messen zumeist die Temperatur der Kochfeldfläche, welche mit einer Zeitverzögerung durch das aufgestellte beheizte Kochgefäß erwärmt wird. Da die Temperatur des Kochgefäßes die kritische Größe für ein Entflammen von organischen Teilen im Kochgefäß ist, sind Temperatursensoren besonders geeignet für eine Beurteilung des Zustands des Kochgefässes und damit als Basis für eine vorgenannte Plausibilitätsprüfung. Sehr wertvolle Zusatzinformationen zum aktuellen Temperaturanstieg des Kochgefäß können durch eine elektromagnetisch messende Sensorik einer Heizeinrichtung oder eine optisch mittels Wärmestrahlung messende Sensorik geliefert werden, da diese Sensoriken im Unterschied zu den klassischen Temperatursensoren quasi verzögerungsfrei Temperaturinformationen liefern.

Eine sinnhafte bzw. vorteilhafte Plausibilitätsprüfung ist auch ohne einen integrierten Sensor in der Heizeinrichtung oder im Kochgerät möglich, wie es häufig bei Strahlungsheizkörpern der Fall ist. In diesem Fall kann eine auf Erfahrungswerten basierende Grenzkurve einer zulässigen Leistung abhängig von einer bisherigen Heizdauer oder von bis dahin zugeführter Heizenergie definiert werden, wobei vorzugsweise eine temporäre Leistungsspitze zum notwendigen Nachheizen im Falle einer erkannten Zugabe von kaltem Lebensmittel zugelassen wird.

In einem vorlagerten Schritt wird vorteilhaft das externe Steuergerät dem Kochgerät zugeordnet, bei sogenannten konnektiven Systemen spricht man von "Pairing", und das externe Steuergerät wird für eine Steuerung eines Kochvorgang erlaubt, beispielsweise erfolgt dies durch eine Aktivierung durch die Bedienperson auf dem Bedienteil des Kochgeräts. Die Bedienung des Kochgeräts bleibt vorzugsweise weiter aktiv, damit die Bedienperson jederzeit unmittelbar leistungsreduzierend oder zum Abschalten der Heizeinrichtung bzw. des ganzen Kochgeräts eingreifen kann.

Für die Plausibilitätsprüfung wird in bevorzugter Ausgestaltung der Erfindung eine Temperatur des Kochgefässes herangezogen, die mit dem Temperatursensor erfasst werden kann. Ein vorgenannter Grenzwert kann bei 50 K liegen, vorzugsweise bei 25 K wenn eine genaue Regelung gewünscht ist. Weicht eine mit dem Temperatursensor erfasste Temperatur des Kochgefässes also um mehr als 50 K oder mehr als 25 K von derjenigen ab, die das Kochgefäß haben müsste anhand der bisherigen Beheizung, die von der Kochgerätsteuerung oder vom externen Steuergerät erfasst worden ist, so liegt wohl ein Fehler oder eine größere Ungenauigkeit vor. Dann kann vorgesehen werden, dass die Heizeinrichtung nur eine verringerte Heizleistung abgibt, oder die Heizdauer kann begrenzt werden. Die vom externen Steuergerät vorgegebene Soll-Leistung und/oder Soll-Heizdauer wird dann von der Kochgerätsteuerung reduziert bzw. abgesenkt.

Eine vorgenannte Plausibilitätsprüfung kann sich von üblichen in Kochgeräten integrierten Schutzeinrichtungen unterscheiden, die auf in den Heizeinrichtungen integrierten Temperatursensoren basieren, dadurch, dass im Fall von Leistungsanforderungen oder Steuerbefehlen eines externen Steuergeräts eine kritischere Prüfung als bei manueller Bedienung über eine Kochgerätbedieneinrichtung vorgenommen wird. So kann das Schutzniveau angehoben werden und vorteilhaft eine Leistungsanforderung von dem externen Steuergerät beschränkt werden. Durch Heranziehen von Zusatzinformationen kann diese Beschränkung einer Leistungsanforderung wieder abgeschwächt bzw. teilweise aufgehoben werden, aber nie über ein Maß hinaus, wie es bei einer direkten manuellen Bedienung erfolgen könnte und würde.

Für die Ausgestaltung einer Plausibilitätsprüfung kann beispielsweise eine Kochgefäßtemperatur über ein mathematisches Modell basierend auf einer gemessenen Temperatur eines integrierten Sensors der Heizeinrichtung oder des Kochgeräts und seiner Temperaturänderung berechnet werden. Sofern verfügbar wird das mathematische Modell noch um verzögerungsfrei gemessene Werte einer elektromagnetischen und/oder optischen Zusatzsensorik angereichert. Es kann vorgesehen sein, dass in dem Fall, dass ein erster Grenzwert von beispielsweise 240°C in der Berechnung überschritten wird, eine Reduzierung der Freigabe der Leistung an die Heizeinrichtung erfolgt, sofern zusätzlich gesendete Sensorinformationen des externen Steuergeräts nicht darlegen, dass das berechnete mathematische Modell eine mutmaßlich zu hohe Temperatur berechnet hat. Dies könnte der Fall sein, weil die externen Sensorinformationen eine zur in der Vergangenheit zugeführten Leistung stark plausible und ausreichend dynamische Charakteristik aufweisen. Als Dynamik ist hierbei die Reaktionsgeschwindigkeit eines Sensors auf Leistungssprünge zu verstehen. Die zulässige bzw. zugelassene Leistung reduziert sich bevorzugt mit zunehmender Temperatur. Überschreitet der Wert in der Berechnung eine obere kritische Grenze von beispielsweise 350°C, dann wird in jedem Fall die Leistungszufuhr unterbrochen, zumal dieser zweite Grenzwert üblicherweise gleich wie bei manueller Bedienung über die integrierte Kochgerätbedieneinrichtung ist. Vorteilhaft kann die Berechnung über das mathematische Modell dadurch unterstützt werden, dass das externe Steuergerät Parameter des Modells zur Verfügung stellt.

In vorteilhafter Ausgestaltung der Erfindung kann die Kochgerätsteuerung zur Erfassung eines Zustands des Kochgeräts, der Heizeinrichtung und/oder des Kochgefässes mindestens eine Information heranziehen, die die an die Heizeinrichtung freigegebene Ist-Leistung betrifft oder eine angenommene, gemessene oder eingegebene thermische Masse des Kochgefässes samt Inhalt. Alternativ kann auch eine an dem Kochgefäß gemessene Temperatur herangezogen werden, was mittels des vorgenannten Temperatursensors besonders vorteilhaft ist. Daraus kann dann eine Temperatur errechnet werden, die am Kochgefäß vorliegen sollte. Dieser Wert wird dann für die vorgenannte Plausibilitätsprüfung herangezogen.

Im weiteren Verfahren kann das externe Steuergerät periodisch oder zu selbstbestimmten Zeitpunkten, beispielsweise bei Änderung der Leistungsanforderung, Soll-Werte bzw. Steuerbefehle an das Kochgerät und die Kochgerätsteuerung übermitteln. Die Sollwerte können Leistungsstufen, Leistung oder Leistungsdichte sein, wobei sich eine Leistungsdichte auf die Größe entweder der Heizeinrichtung oder des Kochgefässes beziehen kann. Sehr vorteilhaft kann das externe Steuergerät neben der Leistungsanforderung auch Informationen zum Status des Kochgefäßes senden, beispielsweise die Sensorinformation, auf deren Basis sie die Leistungsanforderung bestimmt bzw. berechnet. Dies erlaubt im Rahmen der Plausibilitätsprüfung durch die Kochgerätsteuerung eine Bewertung der Dynamik und damit der Qualität der Sensorik. So erfasst beispielsweise ein Sensor, der die Temperatur des Kochgefäßbodens bestimmt, sehr schnell die für die Sicherheit relevante Kochgefäßtemperatur, während ein in einem Deckel angebrachter Sensor diese nur bedingt sieht und nur deutlich verzögert einen kritischen Zustand erkennen würde.

In bevorzugter Weiterbildung der Erfindung können zur Erhöhung der Sicherheit Energiepakete von der Kochgerätsteuerung freigegeben werden, die eine festgelegte Energie aufweisen. Eine Leistungshöhe und/oder eine Heizdauer werden dabei bestimmt mit gegenseitiger Beeinflussung, die von der festgelegten Energie bzw. Größe des freigegebenen Energiepakets abhängen. Ist die Leistung zwar hoch so ist aber die Heizdauer gering und umgekehrt. So kann die Gefahr eines gefährlichen Zustands, der sich am Kochgerät einstellen könnte, verringert werden. Diese Energiepakete können also von der Kochgerätsteuerung freigegeben werden, wobei sie dem externen Steuergerät dann quasi frei zur Verfügung stehen, ohne dass die Kochgerätsteuerung im einzelnen über ihre Verwendung bzw. genaue Aufteilung wachen muss.

Es kann vorgesehen sein, dass nach Verbrauch eines Energiepakets von der Kochgerätsteuerung ein neues Energiepaket gleicher Höhe nur dann freigegeben wird, wenn eine vorgenannte Abweichung unterhalb des Grenzwerts ist. Diese Abweichung wird also wieder im Rahmen der Plausibilitätsprüfung erfasst bzw. bestimmt, und anhand dessen wird das weitere Verfahren gesteuert.

Alternativ kann vorgesehen sein, dass bei einer Abweichung unterhalb des Grenzwerts mehrere Energiepakete von der Kochgerätsteuerung freigegeben werden mit jeweils festgelegter Energie, insbesondere gleich große Energiepakete. Dabei können die Energiepakete beim Verbrauch eine variable Leistungshöhe haben. Hier wird dann nach Verbrauch eines Energiepakets automatisch das nächstfolgende Energiepaket freigegeben. Einer erneuten Plausibilitätsprüfung bedarf es dann nicht. So können alle freigegebenen Energiepakete verbraucht werden. Wenn dann keine neue erfolgreiche Plausibilitätsprüfung erfolgt ist kann daraufhin die Heizeinrichtung abgeschaltet werden oder nur noch mit einer geringen Leistungshöhe betrieben werden, vorzugsweise maximal 25% der maximalen Leistung oder maximal 2,2 W/cm², insbesondere 1,5 W/cm². Deswegen empfiehlt sich eine regelmäßige Plausibilitätsprüfung, um dann jeweils nach Verbrauch aller Energiepakete wieder ein neues freigegeben zu bekommen.

Das Kochgerät kann für den Fall, dass eine Plausibilitätsprüfung nicht bestanden wird und eine Abweichung oberhalb des Grenzwerts liegt, entweder ausgeschaltet werden, alternativ kann eine Leistungshöhe auf ein Niveau abgesenkt werden, das auf Dauer für den Betrieb der Heizeinrichtung unkritisch ist, insbesondere mit aufgestelltem Kochgefäß. So kann zumindest eine Warmhaltefunktion erhalten werden, auch wenn ein voller Betrieb des Kochgeräts mit der zuvor erzeugten Heizleistung nicht mehr sicher genug wäre.

In Ausgestaltung der Erfindung kann durch eine Dynamik eines Sensors, der vorzugsweise einer Leistungsänderung einer Heizeinrichtung folgt, eine Prüfung ermöglicht werden daraufhin, wie sich das Sensorsignal abhängig von einer zu der Heizeinrichtung zugeführten Leistung verändert. Aufgrund einer derart ermittelten Dynamik kann eine maximal zulässige Leistung bestimmt werden, mit welcher die Heizeinrichtung ein Kochgefäß beheizen darf, ohne dass eine Überhitzung oder zu hohe Temperatur als gefährlicher Zustand zu befürchten wäre. Abhängig von der Dynamik können unterschiedlich hohe Leistungen von der Kochgerätsteuerung zugelassen werden. Bei hoher Dynamik reagiert nämlich der Temperatursensor schnell, es liegt also eine schnelle Regelstrecke vor, die auch zu hohe Temperaturen schnell erkennen würde um eine Leistung abzusenken. Eine schnell auftretende kritische Situation kann immer noch schnell und rechtzeitig genug erkannt und abgewendet werden.

Bei hoher Dynamik mit einem schnell ansteigenden bzw. schnell veränderlichen Sensorsignal kann die Kochgerätsteuerung eine hohe Leistung zulassen, vorzugsweise 50% bis 100% der maximalen Leistung. Bei geringer Dynamik mit langsam ansteigendem Sensorsignal kann die Kochgerätsteuerung dagegen nur eine geringe Leistung zulassen, vorzugsweise bis 40% oder nur bis 20% der maximalen Leistung.

Es kann vorgesehen sein, dass in einem weiteren Schritt, der dann ein Prüfschritt ist, ein spezieller Leistungsverlauf mit der Heizeinrichtung gefahren wird, der von einer Vorgabe des externen Steuergeräts abweichen kann und sollte. Diese Abweichung kann von 20% bis 200% der vorgegebenen Leistung reichen, also unter Umständen auch sehr groß sein. So soll eine Gegenreaktion eines Reglers in der Kochgerätsteuerung bewirkt werden, also auch eine Zustandsänderung am Sensor. Anhand der Zeit, die verstreicht, bis diese Gegenreaktion erfolgt, kann eine Dynamik einer Regelschleife abgeschätzt werden. Es liegt eine geringe Dynamik vor wenn die Zeit bis zum Erfolgen der Gegenreaktion lange ist. Andererseits liegt eine hohe Dynamik vor wenn die Zeit bis zum Erfolgen der Gegenreaktion kurz ist. Deswegen kann die vorgenannte Abweichung auch sehr groß gewählt werden, damit die Gegenreaktion eben auch sehr schnell sein kann wenn die gegebene Dynamik es zulässt.

In Ausgestaltung der Erfindung kann für den Fall, dass es bei dem vorbeschriebenen Prüfschritt innerhalb einer vordefinierten Zeit zu keiner Gegenreaktion kommt, eine Sicherheitsfunktion bewirkt oder ausgelöst werden, wobei dann die Leistung von der Kochgerätsteuerung reduziert oder am besten beendet werden kann. Alternativ können auch andere zusätzliche Sicherheitsmaßnahmen ergriffen werden wie eine Signalisierung an eine Bedienperson.

In Weiterbildung der Erfindung wird für den Fall, dass keine Signale von Sensoren des externen Steuergeräts vorliegen, als Sicherheitsfunktion eine maximal zulässige Leistung von der Kochgerätsteuerung begrenzt. Dies kann basierend auf einem Zustand oder einer Zustandsänderung von direkt mit der Kochgerätsteuerung verbundenen Erfassungsmitteln bzw. Sensoren erfolgen, vorzugsweise von einem Temperatursensor und/oder einem Temperaturerfassungsmittel an der Heizeinrichtung oder am Kochgefäß. Dann kann nämlich ein Übertragungsweg zwischen dem externen Steuergerät und den Sensoren oder der Kochgerätsteuerung gestört oder ganz unterbrochen sein, was bedeutet, dass vom externen Steuergerät gar keine oder keine zutreffenden Steuerbefehle mehr kommen können. Es fehlt dem Steuergerät nämlich wahrscheinlich an einer zutreffenden Zustandsinformation.

In einer Ausgestaltung der Erfindung kann vorgesehen sein, dass das externe Steuergerät eine Fernbedienung ist oder als Fernbedienung verwendet wird. Die Fernbedienung weist dann übliche Bedienelemente auf, insbesondere Tasten für eine Leistungsverstellung. Eine solche Fernbedienung kann vorteilhaft mittels einer Funkstrecke mit der Kochgerätsteuerung verbunden sein, insbesondere mittels WLAN, Zigbee, Bluetooth oder BLE. Alternativ könnte es eine IR-Verbindung sein, die aber störanfälliger wäre und eine direkte Sichtlinie braucht. Eine solche Fernbedienung kann in einer ersten Variante vorteilhaft nur für einen Betrieb als Manuell-Steuergerät ausgebildet sein, also quasi als externe Bedieneinrichtung, die vom Kochgerät eine gewisse Strecke entfernt werden kann. Sie kann aber nicht mehr Funktionen ausüben als a, Kochgerät selbst möglich sind.

In einer zweiten Variante kann eine solche Fernbedienung aufwändiger ausgebildet sein und Automatik-Programme odgl. aufweisen, so dass sie dann auch als ein Automatik-Steuergerät ausgebildet sein kann und als solches arbeiten kann, vorzugsweise zusätzlich zu einem möglichen Betrieb mit rein manueller Bedienung, also als Manuell-Steuergerät. Bei einem solchen externen Steuergerät ist eine Unterscheidung wichtig, da mit einem Automatik-Steuergerät Automatik- bzw. Koch-Programme ablaufen sollen ohne dass eine Bedienperson ständig daneben steht oder kontrolliert. Eine potentiell unsichere oder gefährliche Situation kann dann schnell außer Kontrolle geraten bei einem Automatik-Programm, wenn dessen Sensoren oder eine Datenübertragung nicht mehr richtig und zuverlässig arbeiten. Dies gilt es zu vermeiden.

In einer weiteren Ausgestaltung der Erfindung ist das externe Steuergerät ein mobiles Endgerät wie ein Smartphone, PDA oder ein Tablet-Computer. Auch ein solches sozusagen aufwändiges bzw. komplexes externes Steuergerät kann mittels einer vorgenannten Funkstrecke mit WLAN, Zigbee, Bluetooth oder BLE mit der Kochgerätsteuerung verbunden sein. Das mobile Endgerät kann direkt oder über eine darauf laufende App eine Temperaturregelung durchführen zur Vorgabe einer Heizleistung für die Heizeinrichtung mittels Steuerbefehlen als Automatik-Programme. So können bestimmte Leistungsprofile über der Zeit angesteuert werden. Somit wird ein derartiges mobiles Endgerät häufig zumindest auch als Automatik-Steuergerät benutzt und eingeordnet werden, wobei es auch möglich ist, wie mit einer zuvor beschriebenen Fernbedienung nur manuelle Steuerbefehle abzugeben.

Die genannten Automatik-Programme können in einer Ausgestaltung der Erfindung so ausgebildet sein, dass sie Leistungs-Zeit-Profile vorgeben bzw. an die Kochgerätsteuerung geben als Steuerbefehle. Deutlich komfortabler ist ein Automatik-Steuergerät, wenn in einer Ausgestaltung der Erfindung das externe Steuergerät mit einem Temperatursensor verbunden ist, also ein Temperatursensor vorhanden ist. Dann kann nicht nur ein Leistungsprofil vorgegeben werden, sondern ein geregeltes Temperaturprofil. Ebenso kann eine Temperatur einfach nur konstant gehalten werden. Vor allem ist dieser Temperatursensor für die Berechnung eines Grenzwerts für die Plausibilitätsprüfung vorteilhaft, weil die Temperatur beim Kochen sowohl für ein gutes Kochergebnis als auch für die Zwecke dieses Verfahrens mit der Vermeidung kritischer Zustände bei Fehlern in der Fernsteuerung durch das externe Steuergerät das hauptsächliche kritische Maß ist. Andere kritische oder gar gefährliche Zustände als eine zu hohe Temperatur können eigentlich bzgl. der hier betrachteten Sicherheitsmaßnahmen nicht auftreten.

Ein Temperatursensor ist vorteilhaft drahtlos mit dem externen Steuergerät verbunden mittels einer Funkstrecke, vorteilhaft einer vorgenannten Funkstrecke. Der Temperatursensor kann für ein Kochfeld als Kochgerät an einem Kochgeschirr angeordnet sein oder in ein Kochgeschirr integriert sein. Alternativ könnte er als Bratenspieß ausgebildet sein zum Einsatz in einem Backofen. Temperatursensoren zur Anordnung an einem Kochgefäß sind im Stand der Technik grundsätzlich bekannt. Mittels eines solchen Temperatursensors kann das externe Steuergerät ein geregeltes Temperaturprofil ansteuern oder eine Temperaturregelung des Kochgeschirrs übernehmen und dazu der Kochgerätsteuerung eine Leistungsregelung für die Heizeinrichtung dieses Kochgeschirrs vorgeben.

Alternativ kann das externe Steuergerät selbst einen Temperatursensor aufweisen und auch selbst an einem Kochgeschirr angeordnet sein oder in ein Kochgeschirr integriert sein. Dann ist es vorteilhaft als Fernbedienung ausgebildet. In diesem Fall wird das externe Steuergerät besonders vorteilhaft als Automatik-Steuergerät ausgebildet, die Erfassung der Temperatur durch das externe Steuergerät selbst macht ja eigentlich hauptsächlich dann Sinn. Unter Umständen kann der Temperatursensor auch direkt mit dem Kochgerät verbunden sein bzw. seine Signale an dieses senden.

Ein Kochgerät und ein externes Steuergerät können gemeinsam ein erfindungsgemäßes System bilden. Dabei kann vorgesehen sein, dass unterschiedliche externe Steuergeräte mit einem Kochgerät zusammen arbeiten können, so dass es möglich ist, externe Steuergeräte mit unterschiedlichem Leistungsumfang und Bedienkomfort auszuwählen. Auch ein Nachrüsten ist so möglich. Ein erfindungsgemäßes Kochgerät kann dann eben dafür vorbereitet sein, insbesondere ist die Kochgerätsteuerung speziell dazu ausgebildet, mit einem externen Steuergerät zu kommunizieren. In der Kochgerätsteuerung wird das spezielle Verfahren zur Prüfung der Steuerbefehle und/oder des aktuellen Betriebszustands des Kochgeräts durchgeführt, wozu die Kochgerätsteuerung speziell ausgebildet ist. Dabei wird von der Kochgerätsteuerung auch die vorbeschriebene Plausibilitätsprüfung durchgeführt.

Diese und weitere Merkmale gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

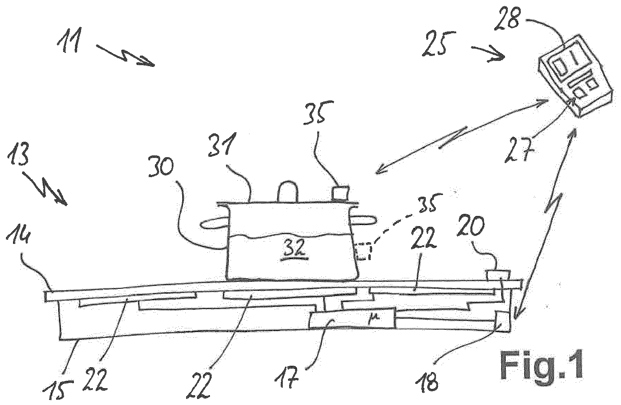

Ein Ausführungsbeispiel der Erfindung ist in der Zeichnung schematisch dargestellt und wird im Folgenden näher erläutert. Dabei zeigt die Fig. 1 eine Darstellung eines erfindungsgemäßen Systems mit einem Kochfeld als erfindungsgemäßem Kochgerät und einem Mobiltelefon als externem Steuergerät sowie einem Temperatursensor in zwei möglichen Positionen.

### Detaillierte Beschreibung des Ausführungsbeispiels

Die Fig. 1 zeigt ein erfindungsgemäßes System 11, das ein Kochfeld 13 als erfindungsgemäßes Kochgerät sowie ein Mobiltelefon 25 als externes Steuergerät aufweist. Das Kochfeld 13 weist einen an sich üblichen Aufbau auf mit einer Kochfeldplatte 14 und einem Gehäuse 15 darunter, in dem die Funktionseinheiten des Kochfelds angeordnet sind. Darin ist eine Kochfeldsteuerung 17 angeordnet, die mit einer Bedieneinrichtung 20 verbunden ist. Diese ist auf der Kochfeldplatte 14 dargestellt, obwohl sie in der Praxis darunter angeordnet sein kann und sollte. Die Bedieneinrichtung 20 weist Bedienelemente und eine Anzeige auf, wie dies bekannt ist.

Des Weiteren ist die Kochfeldsteuerung 17 mit einem Funkmodul 18 verbunden bzw. weist ein solches auf zur Kommunikation mit dem Mobiltelefon 25. Das Funkmodul 18 kann mit einem Funkstandard arbeiten, den das Mobiltelefon beherrscht, beispielsweise WLAN, Zigbee, Bluetooth oder BLE. Für die üblicherweise in der Praxis gewünschten oder gebrauchten Reichweiten bzw. Abstände reichen alle vier. Alternativ kann, wenn anstelle des Mobiltelefons ein anderes externes Steuergerät verwendet wird, ein anderer Funkstandard verwendet werden. Das Funkmodul 18 kann unter der Kochfeldplatte 14 angeordnet sein im Gehäuse 15, unter Umständen direkt an der Unterseite der Kochfeldplatte 14 für eine möglichst störungsfreie Funkübertragung. Ist das erfindungsgemäße Kochgerät ein Backofen, so könnte ein dort vorteilhaft verwendeter Bratspieß als externes Steuergerät mit einem Temperaturfühler mittels eines Kabels mit einer Backofensteuerung verbunden werden, da ein Funken aus einer Backofenmuffel heraus schwierig ist. Die Kabelverbindung an die Backofensteuerung würde dann dem Funkmodul 18 als Kommunikationsmodul für die Steuerung entsprechen, insbesondere eine Steckerbuchse an einer Innenwand der Backofenmuffel.

Das Kochfeld 13 weist mehrere Heizeinrichtungen 22 im Gehäuse auf, die an die Unterseite der Kochfeldplatte 14 angelegt sind. Vorteilhaft sind dies hier Induktionsheizspulen 22, es kann aber jeder Art von Heizeinrichtung sein, auch Strahlungsheizeinrichtungen und Gas oder Mischformen davon. Die Induktionsheizspulen 22 können einzeln betrieben werden oder im Verbund als eine Kochstelle und mit einer gemeinsamen Leistungsstufe bzw. Leistungsdichte betrieben werden, wobei sie dann eben wie eine einzige Heizeinrichtung arbeiten für das Verständnis der vorliegenden Erfindung.

Am Mobiltelefon 25 können auf an sich bekannte Art und Weise Informationen oder Vorgaben über Bedienelemente 27 eingegeben werden. Informationen können einer Bedienperson an einem Display 28 angezeigt werden. Ist das Mobiltelefon 25 ein Smartphone, oder alternativ ein Tablet-Computer, so kann es einen bekannten Touch-Screen aufweisen, der Bedienelemente und Display vereint. Anstelle eines Mobiltelefons oder Tablet-Computers kann das externe Steuergerät auch eine spezielle Fernbedienung sein, entweder nur mit Bedienelementen oder eben auch mit darin abgespeicherten Automatik-Programmen.

Auf einer mittleren Induktionsheizspule 22 ist ein Kochgefäß 30 aufgestellt mit einem Deckel 31, das Wasser 32 enthält für einen Kochprozess, hier beispielhaft weil eine Bedienperson Nudeln kochen möchte. Auf dem Deckel 31 ist ein Temperaturfühler 35 in einer ersten Position angeordnet, beispielsweise magnetisch oder festgeklemmt. Der Temperaturfühler 35 ermittelt die Temperatur am Topfdeckel, wobei daraus die Temperatur des Wassers 32 bestimmt werden kann, beispielsweise durch einen Temperatursensor darin, der federnd an den Deckel 31 angedrückt ist und direkten Kontakt hat. Als alternativer Anbringungsort könnte die gestrichelt dargestellte zweite Position rechts unten an der Seite des Kochgefässes 30 dienen mit dem Vorteil, dass hier durch die Wand des Kochgefässes 30 relativ direkt die Temperatur des Wassers 32 selbst bestimmt werden kann. Eine gute Abstrahlfreiheit für die Funkverbindung ist auch hier gegeben, wenngleich nicht ganz so gut wie oben am Deckel 31. Als nochmals weitere Alternative könnte ein Temperaturfühler 35 auch einen abragenden Temperatursensor aufweisen, der beispielsweise vorne an einem kurzen flexiblen Kabel angeordnet ist. Dieser abragende flexible Temperatursensor kann dann von oben in das Kochgefäß 30 hineinragen und im Wasser 32 hängen um die Wassertemperatur direkt und maximal verfälschungsfrei zu messen. Der Temperaturfühler 35 könnte auch allgemein mehrere Temperatursensoren aufweisen für eine verteilte und bessere Messung. Schließlich ist es noch möglich, einen üblichen Temperatursensor auf der Oberseite der Induktionsheizspule heranzuziehen. Dieser weist zwar primär eine Schutzfunktion gegen ein Überhitzen der Induktionsheizspule selbst oder der Kochfeldplatte 14 aus Glaskeramik auf, er kann aber auch hierfür verwendet werden, zumindest für eine vorgenannte Plausibilitätsprüfung.

Der Temperaturfühler 35 weist eine Funkverbindung auf bzw. ist für eine solche ausgebildet mit einem nicht dargestellten integrierten Funkmodul, wobei ein Funkstandard dem des Funkmoduls 18 entsprechen kann, aber vor allem für das Mobiltelefon 25 geeignet sein muss. Die Energieversorgung erfolgt vorteilhaft mittels eines eingebauten Akkumulators. Der Temperaturfühler 35 weist eben mindestens einen nicht dargestellten Temperatursensor auf, der vorteilhaft in Kontakt mit dem Kochgefäß bzw. dem Deckel 31 ist. Der Temperaturfühler 35 schickt regelmäßig Signale mit der Temperaturinformation über eine Funkverbindung an das Mobiltelefon 25. Das Mobiltelefon 25 führt dann mit dieser Temperaturinformation ein Automatik-Programm durch, beispielsweise wie vorgenannt zum Kochen von Nudeln. Dieses Automatik-Programm kann auf einer App auf dem Mobiltelefon 25 laufen, die auch Bedienereingaben zulässt. Diese können unterschiedlich sein, beispielsweise als Hauptpunkt eine Auswahl des Kochens von Nudeln. Als Unterpunkt kann dann eine Kochzeit für die Nudeln eingegeben werden, beispielsweise 10 min. Alternativ könnte dies auch durch eine Kamera des Mobiltelefons 25 erfasst werden durch Schrifterkennung oder als leichter lesbare Zubereitungsinformation mittels QR-Code odgl..

Mittels des Temperaturfühlers 35 kann nach Starten des Automatik-Programms die Temperatur des Wassers 32 erfasst werden. Das Automatik-Programm sendet zuerst Steuerbefehle an die Kochgerätsteuerung 17 über das Funkmodul 18, die von der Kochgerätsteuerung 17 umgesetzt werden als Leistungsvorgabe an die Induktionsheizspulen 22. Zum schnellen Kochen von Wasser wird die Leistungsvorgabe üblicherweise sehr hoch sein, damit das Wasser 32 schnell kocht. Allerdings beginnt nun auch die erfindungsgemäße Plausibilitätsprüfung. Dabei kann vorgesehen sein, dass die Kochgerätsteuerung 17 die an die Induktionsheizspule 22 insgesamt gegebene Energie erfasst und abspeichert. Diese wird dann mit der Temperaturinformation des Temperaturfühlers 35 verglichen, die das Mobiltelefon 25 zu diesem Zweck an die Steuerung überträgt. Ist die gemessene Temperatur angesichts der erfassten Energie plausibel bzw. dazu passend, so kann der Betrieb des Kochfelds unverändert weitergehen. Diese Plausibilitätsprüfung wird fortlaufend durchgeführt, beispielsweise alle 10 sec oder alle 30 sec. Dies kann davon abhängen wie hoch die Soll-Leistung ist, also häufiger bei hoher Soll-Leistung.

Als zusätzliche Sicherheitsmaßnahme kann überprüft werden, ob die Dynamik des Temperaturfühlers samt dem restlichen System plausibel ist bzw. auf ein fehlerfrei arbeitendes System 11 hinweist. Dazu kann beispielsweise die Leistung reduziert werden oder die Induktionsheizspule 22 kurzfristig ganz abgeschaltet werden, beispielsweise für 10 sec oder 20 sec. Dann wird die Induktionsheizspule wieder mit voller Leistung eingeschaltet. In der kurzen Zwischenzeit haben sich das Kochgefäß 30 und vor allem das Wasser 32 etwas abgekühlt, vielleicht um 5 K. Nach diesem erneutem Einschalten der Induktionsheizspule 22 mit voller Leistung wird die Temperatur des Wassers 32 wohl schnell ansteigen auf 100°C. So weiss die Kochgerätsteuerung 17, dass hier die Dynamik des Systems recht hoch ist. Somit kann die Kochgerätsteuerung 17 die volle Leistung für die Induktionsheizspule 22 freigeben, da die Regelschleife geschlossen ist und vor allem ziemlich schnell ist. Wäre das Ergebnis eine geringe Dynamik bzw. ein eher träges Verhalten, so würde die Kochgerätsteuerung 17 nur eine reduzierte Leistung freigeben und nicht die volle Leistung.

Die Plausibilitätsprüfung wird dann fortlaufend wiederholt, insbesondere regelmäßig. Sie kann all 10 sec oder auch alle 30 sec durchgeführt werden. Ein kürzerer Abstand wird als nicht notwendig angesehen, ein noch längerer Abstand wäre evtl. zu riskant.

Eine Möglichkeit für einen Betrieb wäre es eben auch, wenn die Kochgerätsteuerung 17 nur Energiepakete freigibt, also nur eine zeitlich und/oder in der Höhe eingeschränkte Leistungsfreigabe. Dies könnte vor allem dann angebracht sein, wenn die Plausibilitätsprüfung nicht bestanden worden wäre. Diese Energiepakete sind dann aber so bemessen, dass das Kochen der Nudeln wohl länger dauern würde als bei maximaler Leistung. Die Kochgerätsteuerung 17 kann dabei auch die Energiepakete so steuern, dass nach Aufbrauchen des einen gleich das nächste zur Verfügung gestellt wird solange keine kritische Situation festgestellt wird. Nur für eine unbegrenzte und unüberwachte Leistungsfreigabe reicht es dann nicht.

Hat der Temperaturfühler 35 erfasst, dass der Kochpunkt des Wassers 32 erreicht worden ist, gibt er diese Information über das Automatik-Programm an die Kochgerätsteuerung 17. Entweder erzeugt die dann ein Signal an die Bedienperson oder das Mobiltelefon 25 selbst. Dann kann die Bedienperson die Nudeln ins kochende Wasser geben. Entweder erfasst der Temperaturfühler 35 dies anhand eines deutlichen Temperaturabfalls, oder die Bedienperson gibt es ins Mobiltelefon 25 ein. Dann regelt das Automatik-Programm, in der Regel durch Reduzieren der Leistungsvorgabe nach einer Minute, die Temperatur des Wassers 32 auf knapp 100°C ein anhand der Temperaturinformation. Dazu braucht die Bedienperson dann nicht anwesend zu sein, da ja ein automatisches System vorliegt, und sie auch weiß, wann das Kochen der Nudeln beendet sein wird. Am Ende dessen wird am besten die Leistung ganz abgestellt und wieder ein Signal an die Bedienperson abgegeben. Hier arbeitet das Mobiltelefon 25 als Automatik-Steuergerät, da auf ihm ein automatisches Programm abläuft. Es könnte aber auch leicht vorstellbar als Manuell-Steuergerät arbeiten, wenn eine Bedienperson am Mobiltelefon 25 auch wie an einer Fernbedienung eindeutige und direkte Bedienbefehle eingeben kann, die als Steuerbefehle an die Kochgerätsteuerung 17 gegeben werden können. Dies wäre beispielsweise eine direkte Leistungsvorgabe, beispielsweise mit Leistungsstufen. Im Prinzip entspricht eine solche direkte Leistungsvorgabe einer Eingabe wie an der Bedieneinrichtung 20. Das Mobiltelefon 25 kann also sowohl als Automatik-Steuergerät als auch als Manuell-Steuergerät betrieben werden und dann ein solches für die Kochgerätsteuerung 17 sein.

Die Sicherheit der Bedienung mit dem Mobiltelefon 25 und dem Temperaturfühler 35 wird durch die erfindungsgemäße Plausibilitätsprüfung gewährleistet.

## Patentansprüche

1. Verfahren zur Steuerung eines Kochgeräts mit einem externen Steuergerät, wobei:
- das Kochgerät mindestens eine Heizeinrichtung und eine interne Kochgerätsteuerung aufweist,
- das externe Steuergerät außerhalb des Kochgeräts angeordnet ist,
- das externe Steuergerät Steuerbefehle an die Kochgerätsteuerung geben kann zur Steuerung mindestens der einen Heizeinrichtung,
- die interne Kochgerätsteuerung zur Ansteuerung der Heizeinrichtung und zur Abspeicherung des bestimmten Zustands des Kochgeräts, der Heizeinrichtung und/oder des Kochgefässes ausgebildet ist,
wobei ein Zustand des Kochgeräts, der Heizeinrichtung und/oder eines Kochgefässes darauf von der Kochgerätsteuerung bestimmt wird, wobei dieser Zustand während des Betriebs des Kochgeräts beobachtet oder überwacht wird, vorzugsweise abgespeichert wird,
**gekennzeichnet durch** die folgenden Schritte:
- in einem Schritt wird eine Plausibilitätsprüfung der Steuerbefehle und/oder des aktuellen Betriebszustands des Kochgeräts durchgeführt, wobei bei der Plausibilitätsprüfung der bestimmte Zustand mit anderen Informationen zu einem Zustand des Kochgeräts, der Heizeinrichtung und/oder des Kochgefässes verglichen wird um eine mögliche Abweichung zu erhalten, wobei bei einer Abweichung unterhalb eines Grenzwerts der Betrieb des Kochgeräts weitergeht und wobei bei einer Abweichung oberhalb des Grenzwerts der Betrieb des Kochgeräts eingeschränkt wird,
- in einem Schritt wird ein Steuerbefehl des externen Steuergeräts bezüglich Soll-Leistungshöhe und/oder Soll-Heizdauer von der Kochgerätsteuerung erfasst, wobei dieser Schritt vor oder nach dem anderen vorgenannten Schritt erfolgen kann, und
- im Fall einer Abweichung unterhalb des Grenzwerts wird in einem nachfolgenden Schritt eine von der Kochgerätsteuerung akzeptierte Leistungshöhe oder Heizdauer als Umsetzung des Steuerbefehls für die mindestens eine von dem externen Steuergerät gesteuerte Heizeinrichtung bezüglich Leistungshöhe und/oder bezüglich Heizdauer direkt als Ist-Leistungshöhe und/oder als Ist-Heizdauer übernommen, mit der die Heizeinrichtung dann angesteuert wird,
- im Fall einer Abweichung oberhalb des Grenzwerts reduziert die Kochgerätsteuerung in einem nachfolgenden Schritt eine von dem externen Steuergerät gegebene Leistungshöhe oder Heizdauer bei der Umsetzung des Steuerbefehls für die mindestens eine von dem externen Steuergerät gesteuerte Heizeinrichtung als Ist-Leistungshöhe und/oder als Ist-Heizdauer, mit der die Heizeinrichtung dann angesteuert wird.

2. Verfahren nach Anspruch 1, **dadurch gekennzeichnet, dass** in einem vorausgehenden Schritt das externe Steuergerät zusammen mit einer Aktivierung oder Bestätigung durch eine Bedienperson am Kochgerät diesem Kochgerät bzw. der Heizeinrichtung zugeordnet wird, um eine externe Steuerung eines Kochvorgangs mit dem externen Steuergerät zu erlauben.

3. Verfahren nach Anspruch 1 oder 2, **dadurch gekennzeichnet, dass** mindestens ein Sensor zur Bestimmung des Zustand des Kochgeräts, der Heizeinrichtung und/oder des Kochgefässes vorgesehen ist, wobei die interne Kochgerätsteuerung zur Ansteuerung der Heizeinrichtung und zur Abspeicherung eines Zustands des Kochgeräts, der Heizeinrichtung und/oder des Kochgefässes anhand der Informationen des Sensors und/oder der Steuerbefehle des externen Steuergeräts ausgebildet ist, wobei vorzugsweise der mindestens eine Sensor abgefragt wird und das Ergebnis der Abfrage in der Kochgerätsteuerung verwendet wird.

4. Verfahren nach einem der vorhergehenden Ansprüche, **dadurch gekennzeichnet, dass** für die Plausibilitätsprüfung eine Temperatur des Kochgefässes herangezogen wird und ein Grenzwert für einen Temperaturunterschied bei 50 K liegt, vorzugsweise bei 25 K.

5. Verfahren nach einem der vorhergehenden Ansprüche, **dadurch gekennzeichnet, dass** die Kochgerätsteuerung zur Erfassung eines Zustands des Kochgeräts, der Heizeinrichtung und/oder des Kochgefässes mindestens eine der folgenden Informationen heranzieht:
- freigegebene Ist-Leistungshöhe an die Heizeinrichtung,
- angenommene, gemessene oder eingegebene thermische Masse des Kochgefässes samt Inhalt,
wobei vorzugsweise daraus eine Temperatur errechnet wird, die am Kochgefäß vorliegen sollte.

6. Verfahren nach einem der vorhergehenden Ansprüche, **dadurch gekennzeichnet, dass** das externe Steuergerät Steuerbefehle periodisch oder zu selbst bestimmten Zeitpunkten an die Kochgerätsteuerung gibt, vorzugsweise bei Änderung einer Leistungsanforderung an die Heizeinrichtung, wobei insbesondere die Steuerbefehle Leistungsstufen, eine Leistungshöhe oder eine Leistungsdichte enthalten, wobei sich eine Leistungsdichte entweder auf eine Größe der Heizeinrichtung oder auf eine Größe des Kochgefässes bezieht.

7. Verfahren nach einem der vorhergehenden Ansprüche, **dadurch gekennzeichnet, dass** für den Fall, dass für eine Zeit länger als eine Grenzzeit kein Steuerbefehl von dem externen Steuergerät kommt, eine erneute Plausibilitätsprüfung des aktuellen Betriebszustands des Kochgeräts durchgeführt wird.

8. Verfahren nach einem der vorhergehenden Ansprüche, **dadurch gekennzeichnet, dass** Energiepakete von der Kochgerätsteuerung freigegeben werden mit festgelegter Energie, wobei eine Leistungshöhe und/oder eine Heizdauer bestimmt werden mit gegenseitiger Beeinflussung abhängig von der festgelegten Energie bzw. Größe des freigegebenen Energiepakets, wobei vorzugsweise:
- nach Verbrauch eines Energiepakets von der Kochgerätsteuerung ein neues Energiepaket gleicher Höhe nur dann freigegeben wird, wenn eine Abweichung nach Durchführung einer Plausibilitätsprüfung unterhalb des Grenzwerts ist, und/oder
- nach Verbrauch eines Energiepakets ohne neue Freigabe eines neuen Energiepakets die Heizeinrichtung abgeschaltet wird oder nur noch mit einer Leistungshöhe von maximal 2,2 W/cm² betrieben wird.

9. Verfahren nach einem der vorhergehenden Ansprüche, **dadurch gekennzeichnet, dass** für den Fall, dass eine Plausibilitätsprüfung nicht bestanden wird und eine Abweichung oberhalb des Grenzwerts liegt, das Kochgerät entweder ausgeschaltet wird oder eine Leistungshöhe abgesenkt wird auf ein Niveau, das auf Dauer für den Betrieb der Heizeinrichtung unkritisch ist.

10. Verfahren nach einem der vorhergehenden Ansprüche, **dadurch gekennzeichnet, dass** es eine Dynamik eines Sensors nach Anspruch 3, der vorzugsweise einer Änderung einer Leistungshöhe einer Heizeinrichtung folgt, ermöglicht zu prüfen, wie sich ein Signal des Sensors abhängig von einer zugeführten Leistung zu der Heizeinrichtung verändert, wobei aufgrund einer derart ermittelten Dynamik eine maximal zulässige Leistungshöhe bestimmt wird, welche die Heizeinrichtung einem Kochgefäß zuführen darf, ohne dass eine Überhitzung zu befürchten ist, wobei vorzugsweise in Abhängigkeit von der Dynamik unterschiedlich hohe Leistungshöhen von der Kochgerätsteuerung zugelassen werden.

11. Verfahren nach Anspruch 10, **dadurch gekennzeichnet, dass** bei hoher Dynamik mit schnell ansteigendem Signal des Sensors die Kochgerätsteuerung eine hohe Leistungshöhe zulässt, vorzugsweise 3,6 W/cm² bis 10 W/cm², und/oder dass bei geringer Dynamik mit langsam ansteigendem Signal des Sensors die Kochgerätsteuerung eine geringe Leistungshöhe zulässt, vorzugsweise 0% bis 50% der maximalen Leistungshöhe bzw. bis 3,6 W/cm².

12. Verfahren nach Anspruch 10 oder 11, **dadurch gekennzeichnet, dass** in einem weiteren Schritt als Prüfschritt ein Verlauf der Leistungshöhe mit der Heizeinrichtung gefahren wird, der von einer Vorgabe des externen Steuergeräts abweicht, vorzugsweise um 20% bis 200% der vorgegebenen Leistungshöhe, um so eine Gegenreaktion eines Reglers in der Kochgerätsteuerung zu bewirken, wobei anhand der Zeit bis zum Erfolgen dieser Gegenreaktion eine Dynamik einer Regelschleife abgeschätzt wird mit geringer Dynamik, wenn die Zeit bis zum Erfolgen der Gegenreaktion lange ist, und mit hoher Dynamik, wenn die Zeit bis zum Erfolgen der Gegenreaktion kurz ist, wobei vorzugsweise für den Fall, dass es innerhalb einer vordefinierten Zeit zu keiner Gegenreaktion kommt, eine Sicherheitsfunktion bewirkt wird und die Leistungshöhe von der Kochgerätsteuerung reduziert oder beendet wird oder andere zusätzliche Sicherheitsmaßnahmen ergriffen werden.

13. Verfahren nach einem der vorhergehenden Ansprüche, **dadurch gekennzeichnet, dass** für den Fall, dass keine Signale von Sensoren des externen Steuergeräts vorliegen, eine maximal zulässige Leistungshöhe von der Kochgerätsteuerung begrenzt wird basierend auf einer Zustandsänderung von direkt mit der Kochgerätsteuerung verbundenen Erfassungsmitteln bzw. Sensoren oder von fest am Kochgefäß angeordneten Sensoren, insbesondere zusammen mit dem externen Steuergerät, vorzugsweise von einem Temperatursensor und/oder einem Temperaturerfassungsmittel an der Heizeinrichtung.

14. Verfahren nach einem der vorhergehenden Ansprüche, **dadurch gekennzeichnet, dass** das externe Steuergerät eine Fernbedienung ist, die einen Temperatursensor aufweist und selbst an einem Kochgeschirr angeordnet ist oder in ein Kochgeschirr integriert ist, wobei vorzugsweise das externe Steuergerät eine Temperaturregelung des Kochgeschirrs übernimmt und dazu der Kochgerätsteuerung eine Leistungsregelung für die Heizeinrichtung dieses Kochgeschirrs vorgibt.

15. Verfahren nach einem der Ansprüche 1 bis 13, **dadurch gekennzeichnet, dass** das externe Steuergerät ein mobiles Endgerät ist wie ein Smartphone oder ein Tablet-Computer, wobei ein Temperatursensor an einem Kochgeschirr angeordnet ist oder in ein Kochgeschirr integriert ist, wobei das mobile Endgerät mit diesem Temperatursensor drahtlos verbunden ist mittels einer Funkstrecke, wobei vorzugsweise das mobile Endgerät direkt oder über eine darauf laufende App eine Temperaturregelung durchführt zur Vorgabe einer Heizleistung für die Heizeinrichtung mittels Steuerbefehlen.

16. Kochgerät mit mindestens einer Heizeinrichtung und einer internen Kochgerätsteuerung, **dadurch gekennzeichnet, dass** die Kochgerätsteuerung dazu ausgebildet ist, ein Verfahren nach einem der vorhergehenden Ansprüche auszuführen.

17. System aufweisend ein Kochgerät nach Anspruch 16 und ein externes Steuergerät, **dadurch gekennzeichnet, dass** das externe Steuergerät zur Anordnung außerhalb des Kochgeräts ausgebildet ist und dazu ausgebildet ist, Steuerbefehle an die Kochgerätsteuerung zur Steuerung mindestens der Heizeinrichtung zu geben.
